# FASCICULE DE BREVET EUROPEEN

(11) **EP 2 404 811 B1**
(45) Date de publication et mention de la délivrance du brevet: **29.05.2013**
(21) Numéro de dépôt: 11169334.7
(22) Date de dépôt: 09.06.2011
(51) Int. Cl.: B62D 21/02, B62D 21/18, B62D 49/06, A01D 34/06

(54) **Véhicule automoteur porte-outils**
Selbstfahrendes Werkzeugträger-Fahrzeug
Tool-carrying motor vehicle

(30) Priorité: 06.07.2010 FR 1055480
(43) Date de publication de la demande: 11.01.2012
(73) Titulaire: Noremat, 54700 Ludres (FR)
(72) Inventeur: Bachmann, Jacques, 54550 MAIZIERES (FR)
(74) Mandataire: Loyer & Abello

(56) Documents cités:
- EP-A1- 1 364 572
- WO-A1-2009/059699
- DE-A1-102007 042 599
- DE-U1-202009 006 747
- US-A1- 2008 067 796

## Description

L'invention a pour objet un véhicule automoteur porte-outils pouvant travailler sur routes, comme par exemple un véhicule portant un outil de fauchage des accotements routiers, ou dans les champs comme un tracteur agricole.

Des véhicules de ce genre sont connus, par exemple par le brevet EP 1.364.572 du 15 juin 2002 ; mais tous ces véhicules connus présentent l'inconvénient d'être mal équilibrés et de comporter des moyens de fourniture d'énergie et de transmission de cette énergie, qui sont lourds, complexes et ayant un rendement médiocre.

Le document WO 2009059699 décrit un véhicule selon le préambule de la revendication 1.

La présente invention a pour but de fournir un tel type de véhicule, connu en soi ; mais qui présente l'avantage d'être d'un entretien facile, d'être équilibré et d'avoir un rendement énergétique nettement supérieur à ceux des appareils antérieurs connus.

La présente invention concerne un véhicule automoteur porte-outils pouvant être muni d'outils frontal, arrière, latéral ou en dessous, du type comportant un châssis porté par un pont avant et un pont arrière, ainsi qu'un ensemble moteur et une cabine caractérisé par le fait que ledit châssis est en trois parties : une partie avant, une partie arrière et une partie médiane comprise entre les deux, ladite partie médiane étant surbaissée par rapport auxdites parties avant et arrière ; de façon que le centre de gravité dudit véhicule soit abaissé.

L'outil latéral, le moteur et les moyens d'entrainement de l'outil sont posés sur la partie médiane du châssis, la cabine sur la partie avant et le volume de chargement sur la partie arrière.

Le moteur est disposé sur le coté opposé à celui où l'outil latéral doit travailler.

La présente invention présente également tout ou partie des dispositions suivantes prises séparément ou en combinaison.
a) Les ponts avant et arrière sont fixés, de façon amovible, par dessous le châssis ; tandis que cabine, outil de travail latéral, moteur et volume de chargement sont fixés, également de façon amovible, par dessus le châssis.
d) Le moteur est un moteur thermique.
e) Le moteur thermique et son radiateur, ainsi que les réservoirs de liquides carburant et hydraulique, sont disposés sur le coté opposé à celui où l'outil latéral doit travailler ; tandis que une ou plusieurs pompes hydrauliques sont disposées de l'autre côté, en étant entrainées directement par l'arbre moteur.
f) Le moteur thermique, son radiateur, les réservoirs de liquides carburant et hydraulique, ainsi que la ou les pompes hydrauliques sont disposés sur un même coté du châssis, le coté opposé à celui où l'outil latéral doit travailler, la ou les pompes hydrauliques étant reliées directement à l'arbre moteur, sans renvoi d'angle.
g) Le moteur est un moteur électrique alimenté par des batteries
h) Le moteur électrique et ses batteries d'alimentation sont disposés sur le coté opposé à celui où l'outil latéral doit travailler.
i) Le châssis est constitué par deux longerons centraux, parallèles, la partie médiane comportant, sur ses deux cotés, des supports : pour le moteur d'un coté et pour la pompe hydraulique de l'autre.
j) Le moteur, le radiateur et les réservoirs de carburant et liquide hydraulique sont aménagés de façon à constituer un ensemble, mis en place ou démonté de façon unitaire sur la partie médiane du châssis.
k) La cabine et ses accessoires constituent un ensemble mis en place ou retiré de façon unitaire sur la partie avant du châssis.
l) L'outil de travail latéral et ses accessoires constituent un ensemble, disposé entre la cabine et le groupe moteur, ensemble mis en place ou démonté de façon unitaire.
m) Le volume de chargement constitue un ensemble mis en place ou retiré de façon unitaire sur la partie arrière de châssis.
n) La cabine comporte à l'arrière un pan coupé derrière lequel la partie avant du châssis comporte un palier.
o) L'outil latéral porté par la partie médiane du châssis est un bras articulé travaillant sur le coté du véhicule.
p) Ledit bras est porté par un axe vertical autour duquel il pivote, cet axe étant disposé du coté opposé à celui auquel ledit bras doit travailler et où se trouve l'ensemble constitué du moteur du radiateur et des réservoirs.
q) Ledit axe de pivotement du bras articulé est placé à proximité de l'arrière de la cabine.
r) Ledit axe de pivotement du bras est porté par un attelage trois points orientable.
s) Les deux longerons constituant le châssis portent à leurs deux extrémités avant et arrière des moyens d'attelage trois points.
t) Les extrémités avant des deux longerons portent, en plus de l'attelage trois points, une plaque verticale destinée à servir de support à divers outils.
u) Le châssis est muni à ses deux extrémités avant et arrière d'une prise de force.
v) La cabine comporte des moyens permettant de disposer les commandes du véhicule et de ses outils soit à droite soit à gauche.
w) Lesdits ensembles unitaires peuvent être, au choix, disposés d'un coté ou de l'autre du châssis, lors de la fabrication du véhicule ; de façon que ce dernier puisse être facilement adapté à une conduite à droite ou à gauche.
x) Le véhicule comporte deux moteurs : l'un pour l'avancement du véhicule, l'autre pour la mise en oeuvre des outils, ces moteurs pouvant être tous deux thermiques ou électriques ou bien l'un thermique, l'autre électrique.

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés. Sur ces dessins :
La figure 1 est une vue schématique, en élévation latérale, du châssis du véhicule selon un mode de réalisation de l'invention.
La figure 2 est une vue en perspective du châssis de la figure 1.
La figure 3 est une vue de dessus d'un exemple de réalisation du véhicule selon l'invention.
La figure 4 est une vue de trois-quarts arrière de l'exemple de réalisation de la figure 3, sans cabine, ni outil latéral, ni volume de chargement.
La figure 5 est une vue de trois-quarts arrière gauche de l'exemple de réalisation des figures 3 et 4 muni de sa cabine, de l'outil latéral et du volume de chargement
La figure 6 est une vue de trois-quarts arrière droit correspondant à la figure 5, illustrant l'outil latéral en position de travail.
La figure 7 est une vue de détail, à échelle agrandie, du moyen de fixation de l'outil latéral par une fixation trois-points.

En se reportant à ces figures on voit que le châssis du véhicule selon l'invention est en trois parties : une partie avant A, une partie arrière B et, entre les deux une partie centrale C.

La partie centrale C est à un niveau inférieur de celui des parties A et B et comporte de chaque coté des plateaux supports D.

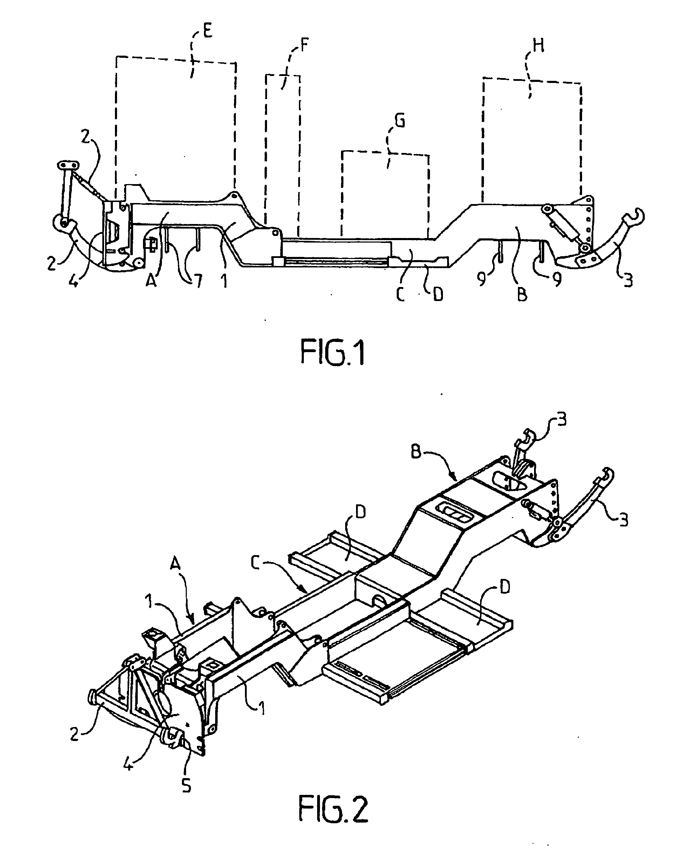

Sur la figure 2 on voit que le châssis est constitué par deux longerons 1, parallèles.

A leurs extrémités avant les deux longerons 1 portent un attelage trois-points, référence 2 à l'avant et 3 à l'arrière

Aux extrémités avant des deux longerons 1 est fixée une plaque 4, qui comporte des échancrures 5, qui laissent passer les deux bras inférieurs de l'attelage trois-points 2. Cette plaque 4 permet de fixer à l'avant du véhicule divers outils.

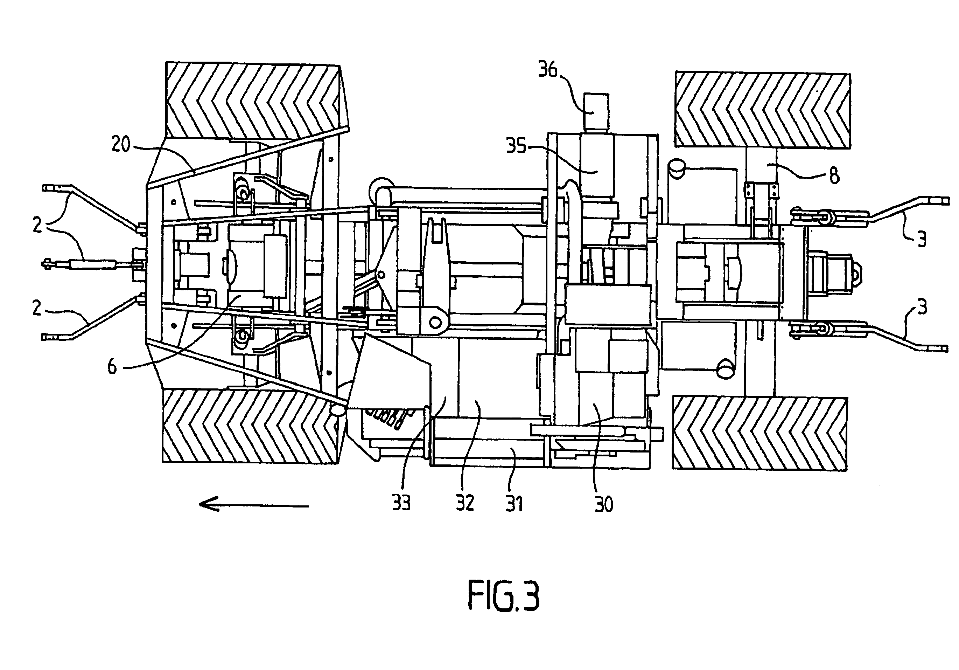

Le pont avant 6 (fig. 3) est fixé en-dessous du châssis constitué part les longerons 1 par des moyens 7, qui permettent de le démonter facilement et, de la même façon le pont arrière 8 (fig. 3) par des moyens analogues 9.

Comme cela est représenté schématiquement à la figure 1 ; alors que les moyens de montage 7 et 9 des ponts avant et arrière sont situés en-dessous des longerons 1, la cabine E, l'outil de travail latéral F, le moteur et ses accessoires G et le volume de chargement H sont posées sur le châssis.

L'outil de travail latéral F et le groupe moteur G sont placés sur la partie centrale C du châssis, la cabine E sur la partie avant A et le volume de chargement H, sur la partie arrière B.

Ces éléments E, F, G et H sont mis en place sur les longerons 1 et fixés de façon indépendante, ce qui permet de les déposer et de les remettre en place indépendamment les uns des autres, ce qui simplifie considérablement les opérations de maintenance.

Le fait que le groupe moteur G et l'outil F soient sur la partie surbaissée du châssis abaisse le centre de gravité.

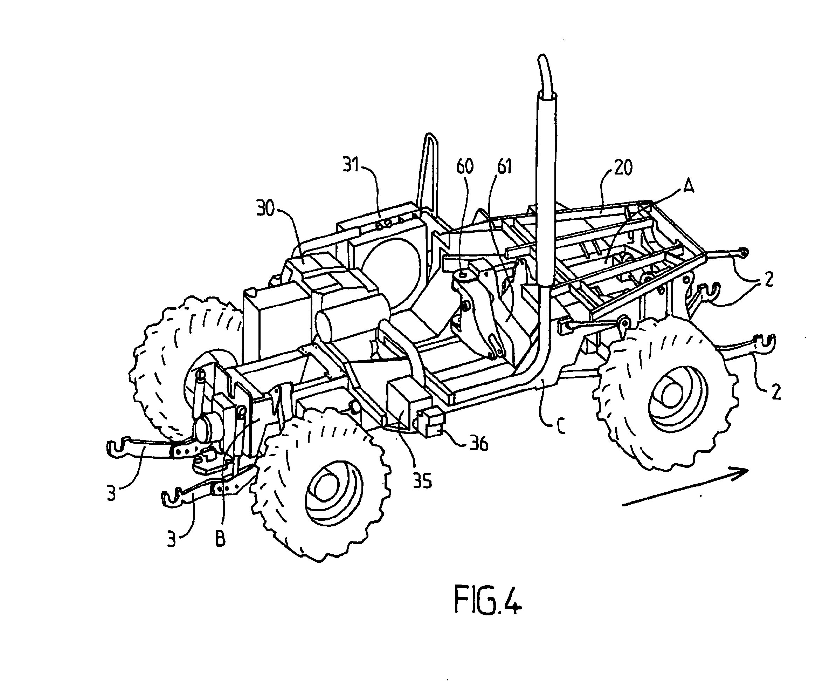

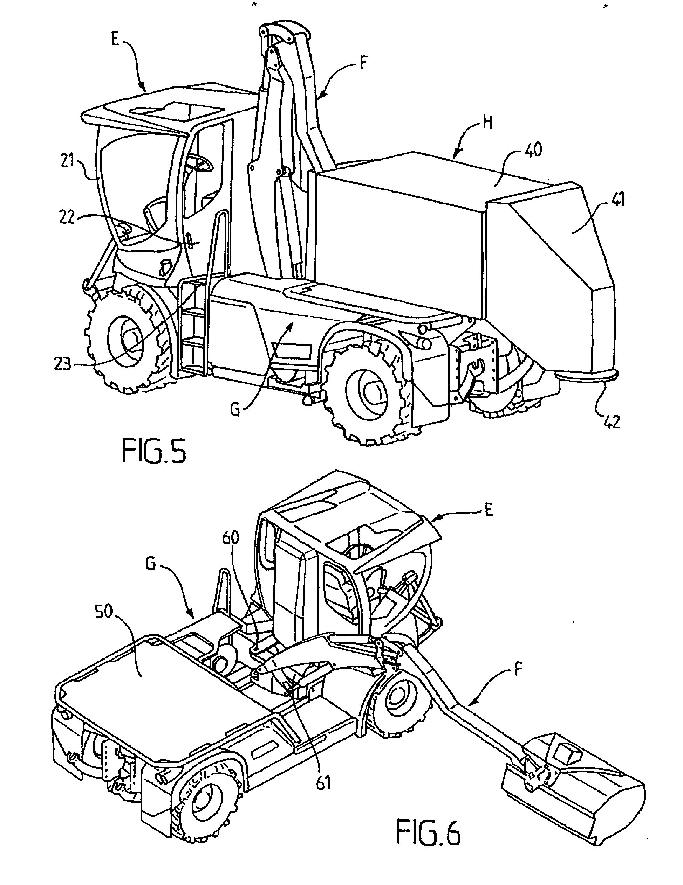

En se reportant aux figures 3 et 4 on voit que, à sa partie avant A, le châssis porte un plancher tubulaire 20 qui sert de support à la cabine 21 (fig. 5, 6) ; de sorte que celle-ci est facilement démontable.

Le moteur et ses accessoires forment l'ensemble G, qui est placé à l'arrière de la partie centrale C du châssis formé par les deux longerons 1.

A l'exemple représenté aux figures 3 et 4 le moteur proprement dit 30 est disposé transversalement par rapport aux longerons 1, son radiateur 31 est disposé sur son coté, tous les deux étant portés par le support D, situé sur le côté gauche du châssis. Le réservoir de carburant 32 est situé à côté du radiateur 31, ainsi que le réservoir de liquide hydraulique 33. Les pompes hydrauliques 35 et 36 sont attelées directement sur l'arbre moteur.

Comme on le verra plus loin, l'outil latéral est monté de façon à travailler à droite du véhicule. Les éléments les plus lourds du groupe moteur, 30, 31, 32 et 33 étant portés sur le côté gauche du châssis, on obtient ainsi un équilibrage satisfaisant.

Cette disposition du moteur n'est pas limitative

En effet il est possible de disposer le moteur 30 longitudinalement, les pompes étant directement flanquées sur le moteur. Cette disposition diminue le poids de l'ensemble, puisque l'arbre traversant 34 n'est plus nécessaire et, de plus, permet un meilleur équilibrage, puisque cela augmente le poids des éléments situés à l'opposé du bras de l'outil latéral. Son seul inconvénient est que cette disposition augmente l'empattement du véhicule, mais cet inconvénient est mineur.

L'invention n'est pas non plus limitée à l'emploi d'un moteur thermique : le moteur peut être un moteur électrique alimenté par des batteries.

Dans ce cas le moteur électrique et ses batteries sont disposés à l'emplacement du moteur 30, de son radiateur 31 et des réservoirs 32 et 33 ; c'est-à-dire du côté opposé au côté où va travailler l'outil latéral.

Il est également possible de disposer deux moteurs : l'un pour l'entrainement des roues ; l'autre pour actionner les outils. Ces deux moteurs peuvent être thermiques ou électriques tous les deux ou encore être l'un thermique, l'autre électrique.

Sur les figures 5 et 6, qui représentent un exemple de mise en oeuvre de l'invention, on voit la disposition des éléments E, F, G, et H sur le véhicule, disposition qui correspond à la vue schématique de la figure 1.

Sur ces figures l'élément H est représenté sous la forme d'un coffre de volume important 40 associé à une goulotte 41, munie à sa base d'un disque 42. Cet équipement est celui d'un dispositif de déneigement ou de sablage de la chaussée en cas de verglas ; mais cela n'est donné qu'à titre d'exemple non limitatif. Cet élément H peut être une benne, un réservoir de liquide désherbant associé à un pulvérisateur porté par l'attelage 3 ou autre et c'est la raison pour laquelle il a été désigné soue le terme générique de « volume de chargement ».

Sur ces figures 5 et 6 on voit que la cabine correspond à ce qui a été décrit dans la demande de brevet 09.55160 du 23 juillet 2009 au nom du demandeur. Cette cabine est de forme trapézoïdale et comporte, à son arrière, au moins un pan coupé 22, qui ménage un palier 23. Ce palier est un élément de sécurité, puisqu'il permet au conducteur de vérifier que la voie est libre avant de descendre du véhicule

Sur la figure 6 on voit que l'élément F, l'outil latéral, est un bras articulé, qui porte un outil de fauchage ou épareuse, qui sert à faucher l'herbe sur les bas-côtés des routes. Comme indiqué plus haut, le groupe moteur et ses accessoires G est situé du côté opposé à l'outil de travail F pour des raisons d'équilibrage. Bien évidemment l'invention n'est pas limitée au cas où l'outil latéral est une épareuse.

Sur cette figure 6 le coffre 40, la goulotte 41 et le disque 42 ont été retirés ; de sorte qu'il ne reste plus qu'une plateforme de chargement 50.

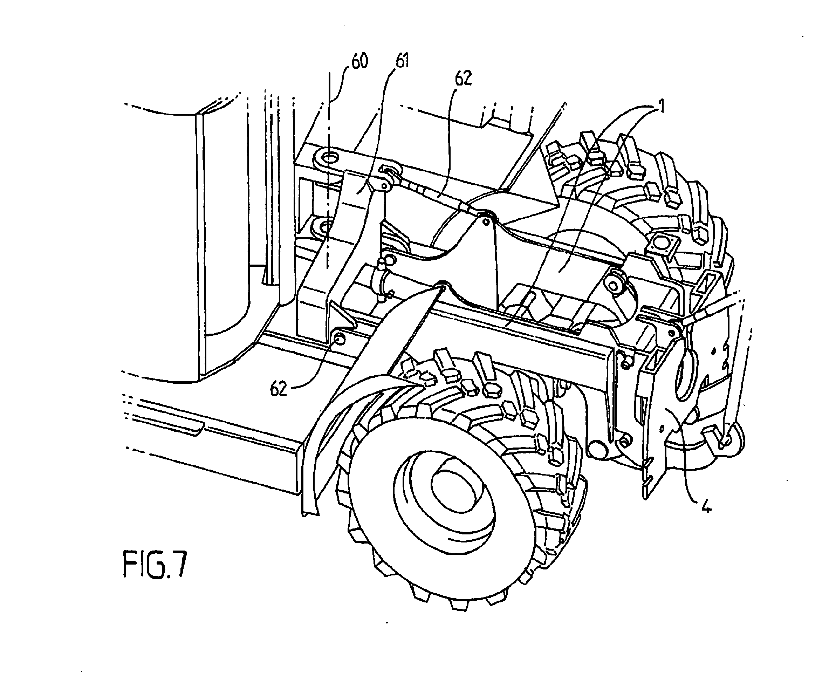

Sur cette figure 6, ainsi que sur la figure 7 on voit que le bras articulé F est monté à pivotement sur un axe vertical 60 porté par un support triangulaire 61, lui-même porté par un attelage trois-points, dont la bielle supérieure permet de régler la verticalité dudit axe 60.

Le bras latéral F étant facilement démontable, puisque porté par un attelage trois points, la partie centrale surbaissée C peut loger un plateau long, une benne ou un conteneur à l'arrière de la cabine et l'extrémité de la partie B du châssis, en passant, si nécessaire, au-dessus du groupe moto-propulseur G. Le véhicule automoteur, conçu prioritairement pour des travaux de fauchage des cotés des routes et chemins, devient alors un véhicule de transport particulièrement adapté aux besoins des communes.

D'autre part, dans l'exemple représenté, les outils tels que F sont placés sur la partie médiane du châssis ; bien que cela ne soit pas représenté, il est possible de disposer des outils en dessous de cette partie centrale, par exemple des outils de nettoyage par brossage et/ou aspiration les matières aspirées étant évacuées dans un conteneur posé sur la partie B du châssis.

L'usage du verbe « comporter », « comprendre » ou « inclure » et de ses formes conjuguées n'exclut pas la présence d'autres éléments ou d'autres étapes que ceux énoncés dans une revendication. L'usage de l'article indéfini « un » pour un élément n'exclut pas, sauf mention contraire, la présence d'une pluralité de tels éléments.

Dans les revendications, tout signe de référence entre parenthèses ne saurait être interprété comme une limitation de la revendication.

## Revendications

1. Véhicule automoteur pouvant être muni d'outils de travail frontal, arrière, latéral ou en dessous, du type comportant un châssis porté par un pont avant et un pont arrière, ainsi qu'un ensemble moteur et une cabine, ledit châssis étant en trois parties : une partie avant (A), une partie arrière (B) et une partie médiane (C), comprise entre elles deux ; **caractérisé par le fait que** ladite partie médiane (C) est surbaissée par rapport auxdites parties avant (A) et arrière (B) ; de façon que le centre de gravité dudit véhicule soit abaissé, et qu'un outil latéral (F), l'ensemble moteur et les moyens d'entrainement de l'outil (G) sont posés sur la partie médiane (C), la cabine (E) sur la partie avant (A) et un volume de chargement (H) sur la partie arrière (B), l'ensemble moteur étant disposé sur le côté opposé à celui où l'outil latéral (F) doit travailler.

2. Véhicule selon la revendication 1, **caractérisé par le fait que** le moteur est thermique, ledit moteur (30) et son radiateur (31), ainsi que les réservoirs de liquides carburant (32) et hydraulique (33), étant disposés sur le côté opposé à celui où l'outil latéral (F) doit travailler ; tandis que une ou plusieurs pompes hydrauliques (35, 36) sont disposées de l'autre côté, en étant entrainées directement par l'arbre moteur (34).

3. Véhicule selon la revendication 1, **caractérisé par le fait que** le moteur thermique (30) est en position longitudinale, ledit moteur (30), son radiateur (31), les réservoirs de liquides carburant (32) et hydraulique (33), ainsi que la ou les pompes hydrauliques (35,36) étant disposés sur un même côté du châssis, le côté opposé à celui où l'outil latéral (F) doit travailler, la ou les pompes hydrauliques (35,36) étant reliées directement à l'arbre moteur, sans renvoi d'angle.

4. Véhicule selon la revendication 1, **caractérisé par le fait que**, le moteur est électrique, alimenté par des batteries, ledit moteur et les batteries d'alimentation étant disposés sur le côté opposé à celui où l'outil latéral doit travailler.

5. Véhicule selon l'une des revendications 1 à 2 et 4, **caractérisé par le fait que** le châssis est constitué par deux longerons centraux (1), parallèles, la partie médiane (C) comportant, sur ses deux cotés, des supports (D) : pour le moteur (30) d'un coté et pour la pompe hydraulique (35, 36) de l'autre.

6. Véhicule selon la revendication 1, **caractérisé par le fait que** le moteur (30), le radiateur (31) du moteur et les réservoirs de carburant et liquide hydraulique (32,32) sont aménagés de façon à constituer un ensemble, mis en place ou démonté de façon unitaire sur la partie médiane du châssis.

7. Véhicule selon la revendication 1, **caractérisé par le fait que** la cabine (E) comporte à l'arrière un pan coupé (22) derrière lequel la partie avant du châssis comporte un palier (23).

8. Véhicule selon la revendication 1, dans lequel l'outil (F) latéral, porté par la partie médiane (C) est un bras articulé travaillant sur le côté dudit véhicule.

9. Véhicule selon la revendication 8, **caractérisé par le fait que** ledit bras est porté par un axe vertical (60) autour duquel il pivote, cet axe étant disposé du côté opposé à celui auquel ledit bras doit travailler.

10. Véhicule selon la revendication 9, **caractérisé par le fait que** ledit axe (60) de pivotement du bras articulé est placé à proximité de l'arrière de là cabine.

11. Véhicule selon les revendications 9 et 10, **caractérisé par le fait que** l'axe de pivotement (60) du bras est porté par un attelage trois points orientable (61).

12. Véhicule selon la revendication 5, **caractérisé par le fait que** les deux longerons (1) constituant le châssis portent à leurs deux extrémités avant et arrière des moyens d'attelage trois points (2 et 3).

13. Véhicule selon la revendication 12, dans lequel les extrémités avant des deux longerons (1) portent, en plus de l'attelage trois points (2), une plaque verticale (4) destinée à servir de support à divers outils.

14. Véhicule selon la revendication 1, **caractérisé par le fait que** la cabine (21) comporte des moyens permettant de disposer les commandes du véhicule et de ses outils soit à droite soit à gauche.

15. Véhicule selon la revendication 6, **caractérisé par le fait que** ledit ensemble unitaire (F, G) peut être, au choix, disposé d'un coté ou de l'autre du châssis, lors de la fabrication du véhicule ; de façon que ce dernier puisse être facilement adapté à une conduite à droite ou à gauche.

16. Véhicule selon l'une quelconque des revendications précédentes, **caractérisé par le fait que** il comporte deux moteurs : l'un pour l'avancement du véhicule, l'autre pour la mise en oeuvre des outils, ces moteurs pouvant être tous deux thermiques ou électriques ou bien l'un thermique, l'autre électrique.

## Patentansprüche

1. Selbstfahrendes Fahrzeug, welches mit frontal, hinten, seitlich oder unterseitig angebrachten Arbeitsgeräten ausgestattet sein kann, derart ausgebildet, dass es ein durch eine Vorderachse und eine Hinterachse getragenes Fahrgestell sowie eine Motoreinheit und eine Kabine aufweist, wobei das Fahrgestell aus drei Teilen besteht: einem Vorderteil (A), einem Hinterteil (B) und einem zwischen diesen beiden eingeschlossenen Mittelteil (C); **dadurch gekennzeichnet, dass** der Mittelteil (C) im Verhältnis zu dem Vorderteil (A) und dem Hinterteil (B) tiefergelegt ist, so dass der Schwerpunkt des Fahrzeuges abgesenkt ist und dass ein seitliches Gerät (F), die Motoreinheit und die Antriebsmittel des Arbeitsgerätes (G) auf dem Mittelteil (C), die Kabine (E) auf dem Vorderteil (A) und ein Ladungsinhalt (H) auf dem Hinterteil (B) aufgesetzt sind, wobei die Motoreinheit auf der gegenüberliegenden Seite von der Seite, auf der das seitliche Gerät (F) arbeiten soll, angebracht ist.

2. Fahrzeug nach Anspruch 1, **dadurch gekennzeichnet, dass** der Motor ein Verbrennungsmotor ist, wobei der Motor (30) und dessen Kühler (31) sowie der Kraftstofftank (32) und der Hydraulikflüssigkeitstank (33) auf der gegenüberliegenden Seite von der Seite, auf der das seitliche Gerät (F) arbeiten soll, angebracht sind; während eine oder mehrere Hydraulikpumpen (35, 36) auf der anderen Seite angebracht sind und direkt durch die Antriebswelle (34) angetrieben werden.

3. Fahrzeug nach Anspruch 1, **dadurch gekennzeichnet, dass** der Verbrennungsmotor (30) in längslaufender Position angeordnet ist, wobei der Motor (30), dessen Kühler (31), der Kraftstofftank (32) und der Hydraulikflüssigkeitstank (33) sowie eine oder mehrere Hydraulikpumpen (35, 36) auf derselben Seite des Fahrgestells angeordnet sind, nämlich auf der gegenüberliegenden Seite von der Seite, an der das seitliche Gerät (F) arbeiten soll, wobei eine oder mehrere Hydraulikpumpen (35, 36) direkt, ohne Eckumlenkung, mit der Antriebswelle verbunden sind.

4. Fahrzeug nach Anspruch 1, **dadurch gekennzeichnet, dass** der Motor ein durch Akkumulatoren versorgter Elektromotor ist, wobei der Motor und die Versorgungsbatterien auf der gegenüberliegenden Seite von der Seite, an der das seitliche Gerät arbeiten soll, angebracht sind.

5. Fahrzeug nach Anspruch 1 bis 2 und 4, **dadurch gekennzeichnet, dass** das Fahrgestell aus zwei parallelen zentralen Längsträgern (1) besteht, wobei der Mittelteil (C) auf beiden Seiten mit Trägern (D) ausgestattet ist: auf der einen Seite für den Motor (30) und auf der anderen Seite für die Hydraulikpumpe (35, 36).

6. Fahrzeug nach Anspruch 1, **dadurch gekennzeichnet, dass** der Motor (30), der Kühler (31) des Motors und der Kraftstofftank und der Hydraulikflüssigkeitstank (32, 33) so angeordnet sind, dass sie eine Einheit bilden, die auf dem Mittelteil des Fahrgestells einheitlich anordbar oder demontierbar ist.

7. Fahrzeug nach Anspruch 1, **dadurch gekennzeichnet, dass** die Kabine (E) hinten eine abgestumpfte Ecke (22) aufweist, hinter der das Vorderteil des Fahrgestells einen Leiterabsatz (23) aufweist.

8. Fahrzeug nach Anspruch 1, bei dem das von der Mittelpartie (C) getragene seitliche Gerät (F) ein Gelenkarm ist, der auf der Seite des Fahrzeuges arbeitet.

9. Fahrzeug nach Anspruch 8, **dadurch gekennzeichnet, dass** der Arm von einer vertikalen Achse (60) getragen ist, um die herum er sich schwenkt, wobei diese Achse auf der gegenüberliegenden Seite von der Seite, auf der der Arm arbeiten soll, angebracht ist.

10. Fahrzeug nach Anspruch 9, **dadurch gekennzeichnet, dass** die Schwenkachse (60) des Gelenkarmes in der Nähe der Hinterseite der Kabine positioniert ist.

11. Fahrzeug nach den Ansprüchen 9 und 10, **dadurch gekennzeichnet, dass** die Schwenkachse (60) des Armes von einem ausrichtbaren Dreipunkt-Kraftheber getragen wird.

12. Fahrzeug nach Anspruch 5, **dadurch gekennzeichnet, dass** die zwei Längsträger (1), die das Fahrgestell bilden, an ihren vorderen und hinteren Enden Dreipunkt-Krafthebemittel (2 und 3) tragen.

13. Fahrzeug nach Anspruch 12, bei dem die vorderen Enden der zwei Längsträger (1) zusätzlich zu dem Dreipunkt-Kraftheber (2) eine vertikale Scheibe (4) tragen, welche als Träger für verschiedene Geräte dient.

14. Fahrzeug nach Anspruch 1, **dadurch gekennzeichnet, dass** die Kabine (21) Mittel aufweist, die es ermöglichen, die Bedienungen des Fahrzeugs und seiner Geräte entweder rechts oder links anzuordnen.

15. Fahrzeug nach Anspruch 6, **dadurch gekennzeichnet, dass** die einheitliche Gesamtheit (F, G) während der Herstellung des Fahrzeuges wahlweise auf der einen oder anderen Seite des Fahrgestells angeordnet werden kann, so dass das Fahrzeug leicht an eine Fahrweise auf der linken oder rechten Seite angepasst werden kann.

16. Fahrzeug nach einem der vorstehenden Ansprüche, dadurch gekennzeichet, dass es zwei Motoren aufweist: einen für die Fortbewegung des Fahrzeuges und den anderen für den Einsatz der Geräte, wobei diese Motoren beide Verbrennungsmotoren oder beide Elektromotoren sein können, oder auch einer ein Verbrennungsmotor und der andere ein Elektromotor sein kann.

## Claims

1. Automotive vehicle being able to be equipped with work tools at the front, rear, side or underside, of the type comprising a frame borne by a front axle and a rear axle, as well as an engine assembly and a cab, said frame having three parts: one front part (A), one rear part (B) and one middle part (C), comprised between these two; **characterised by** the fact that said middle part (C) is lowered relative to said front (A) and rear (B) parts; so that the centre of gravity of said vehicle is decreased, and that one side tool (F), the engine assembly and the means for driving the tool (G) are positioned on the middle part (C), the cab (E) on the front part (A) and a load volume (H) on the rear part (B), the engine assembly being arranged on the opposite side to the one on which the side tool (F) must operate.

2. Vehicle according to claim 1, **characterised by** the fact that the engine is a heat engine, said engine (30) and its radiator (31), as well as the tanks for fuel liquids (32) and hydraulic liquids (33), being arranged on the opposite side to the one on which the side tool (F) must operate; whilst one or more hydraulic pump(s) (35, 36) are arranged on the other side, being directly driven by the engine shaft (34).

3. Vehicle according to claim 1, **characterised by** the fact that the heat engine (30) is in a longitudinal position, said engine (30), its radiator (31), the tanks for fuel liquids (32) and hydraulic liquids (33), as well as the hydraulic pump(s)(35, 36) being arranged on a same side of the frame, the opposite side to the one on which the side tool (F) must operate, the hydraulic pump(s) (35, 36) being directly connected to the engine shaft, without a bellcrank.

4. Vehicle according to claim 1, **characterised by** the fact that the engine is electric, supplied by batteries, said engine and the supply batteries being arranged on the opposite side to the one on which the side tool must operate.

5. Vehicle according to one of claims 1 to 2 and 4, **characterised by** the fact that the frame is formed by two central, parallel side rails (1), the middle part (C) comprising, on both of its sides, supports (D): for the engine (30) on one side and for the hydraulic pump (35, 36) on the other side.

6. Vehicle according to claim 1, **characterised by** the fact that the engine (30), the radiator (31) of the engine and the tanks for fuel and hydraulic liquid (32, 33) are housed so as to form an assembly, put in position or dismounted as a unit on the middle part of the frame.

7. Vehicle according to claim 1, **characterised by** the fact that the cab (E) comprises a cant wall (22) at the rear, behind which the front part of the frame comprises a platform (23).

8. Vehicle according to claim 1, wherein the side tool (F), borne by the middle part (C) is an articulated arm operating on the side of said vehicle.

9. Vehicle according to claim 8, **characterised by** the fact that said arm is borne by a vertical axis (60) around which it pivots, this axis being arranged on the opposite side to the one on which said arm must operate.

10. Vehicle according to claim 9, **characterised by** the fact that said pivot axis (60) of the articulated arm is positioned near to the rear of the cab.

11. Vehicle according to claims 9 and 10, **characterised by** the fact that the pivot axis (60) of the arm is borne by a harness which can be orientated at three points (61).

12. Vehicle according to claim 5, **characterised by** the fact that the two side rails (1) forming the frame bear three-point harnessing means (2 and 3) on their two front and rear ends.

13. Vehicle according to claim 12, wherein the front and rear ends of the two side rails (1) bear, as well as the three-point harness (2), a vertical plate (4) designed to work as a support for various tools.

14. Vehicle according to claim 1, **characterised by** the fact that the cab (21) comprises means enabling the controls of the vehicle and of its tools to be arranged either on the right or on the left.

15. Vehicle according to claim 6, **characterised by** the fact that said one-part assembly (F, G) can be, upon selection, arranged on one side or the other of the frame, during the manufacture of the vehicle; so that the latter can be easily adapted to be driven on the right or on the left.

16. Vehicle according to any of the preceding claims, **characterised by** the fact that it comprises two engines: one for the movement of the vehicle, the other for the implementation of the tools, both of these engines being heat engines or electric engines or even one being a heat engine, the other being an electric engine.
